# EUROPÄISCHE PATENTANMELDUNG

(11) **EP 1 586 804 A2**
(43) Veröffentlichungstag der Anmeldung: **19.10.2005**
(21) Anmeldenummer: 05005681.1
(22) Anmeldetag: 16.03.2005
(51) Int. Cl.: F16N 39/00

(54) **Hydraulisches Versorgungssystem von Maschinen**

(30) Priorität: 16.04.2004 DE 102004018389
(71) Anmelder: INA-Schaeffler KG, 91074 Herzogenaurach (DE)
(72) Erfinder: Kremer, Thomas, 90762 Fürth (DE)

(57) **Zusammenfassung**

Hydraulisches Versorgungssystem von Maschinen, insbesondere von Brennkraftmaschinen, mit einer Pumpe, die aus einem Vorratsraum Hydraulikflüssigkeit durch Leitungen zu verschiedenen Funktionsbaugruppen, wie Lagern, Schalt- oder Steuerelementen, Aktuatoren oder dergleichen, fördert, von wo die Hydraulikflüssigkeit zurück zum Vorratsraum gelangt, wobei im Bereich der Leitungen eine Luft-/Gas-Abscheideeinrichtung (1) vorgesehen ist.

## Beschreibung

### Beschreibung

### Gebiet der Erfindung

Hydraulisches Versorgungssystem von Maschinen, insbesondere von Brennkraftmaschinen, mit einer Pumpe, die aus einem Vorratsraum Hydraulikflüssigkeit durch Leitungen zu verschiedenen Funktionsbaugruppen, wie Lagern, Schalt- oder Steuerelementen, Aktuatoren oder dergleichen fördert, von wo die Hydraulikflüssigkeit zurück zum Vorratsraum gelangt.

### Hintergrund der Erfindung

Bei Maschinen, insbesondere Brennkraftmaschinen, gibt es viele Funktionsbaugruppen, die mittels hydraulischer Druckflüssigkeit geschaltet, verstellt usw. werden. Des Weiteren werden die Reibung und der Verschleiß zwischen sich bewegenden Bauteilen durch Schmierung minimiert. Allerdings kommt es während des Betriebes solcher hydraulischer Versorgungssysteme häufig zum Einschluss von Luft oder Gasen in die Hydraulikflüssigkeit, z.B. wenn die Hydraulikflüssigkeit von den Funktionsbaugruppen wieder in den Vorratsraum durch Gas- oder Lufträume, in denen sich Bauteile schnell bewegen, zurückfließen muss. Dieser Luft- oder Gasanteil kann ab einem gewissen Anteil in der Hydraulikflüssigkeit zu einer unzureichenden Funktion der Baugruppen führen. Dies ist zum einen auf die Kompressibilität der Hydraulikflüssigkeit aufgrund des gasförmigen Anteils zurückzuführen, wodurch Verzögerungen, beispielsweise bei Schaltvorgängen eintreten. Zum anderen führen die Gasbestandteile im ungünstigsten Falle zum Abreißen des Schmierfilms in Lagern. Die DE-42 14 324 C2 und auch die DE- 199 48 163 A1 beschreiben Einrichtungen zum Trennen von ölhaltigen Aerosolen und Rückführung des Ölanteils in das Triebwerksgehäuse von Brennkraftmaschinen. Dabei handelt es sich allerdings um Einrichtungen zum Entlüften des Triebwerksgehäuses von Brennkraftmaschinen, bei denen die durch Spalte zwischen sich gegeneinander bewegenden Bauteile austretenden Verbrennungsgase ölhaltige bzw. feste Stoffe mitreißen, die dann aus den Gasen ausgeschieden werden sollen. Derartige Einrichtungen sind in ihrer Funktion auf den Hauptbestandteil Luft/Gas ausgelegt und nicht auf das Abscheiden von geringeren Luft-/Gas-Bestandteilen aus einer Hydraulikflüssigkeit. Daher sind sie zum Einsatz in hydraulischen Versorgungssystemen nicht geeignet.

### Aufgabe der Erfindung

Aufgabe der Erfindung ist es daher, ein hydraulisches Versorgungssystem so zu verbessern, dass die Funktion aller Baugruppen, wie Lager, Schalt- oder Steuerelemente, Aktuatoren und dergleichen, voll erhalten bleibt und nicht durch zu hohe Luft- oder Gasanteile beeinträchtigt wird

### Zusammenfassung der Erfindung

Die Aufgabe der Erfindung wird dadurch gelöst, dass im Bereich der Leitungen des hydraulischen Versorgungssystems eine Luft-/Gas-Abscheideeinrichtung vorgesehen ist. Dadurch wird erreicht, dass der Luft-/Gas-Anteil in der Hydraulikflüssigkeit nicht so weit ansteigt, dass die Funktionsfähigkeit der Baugruppen beeinträchtigt wird. Dabei kommt es zunächst nicht darauf an, wie die Abscheideeinrichtung ausgestaltet ist, sondern dass ein hydraulisches Versorgungssystem in erfinderischer Weise mit einer Abscheideeinrichtung ausgerüstet ist.

In einer bevorzugten Ausgestaltung der Erfindung weist die Luft-/Gas-Abscheideeinrichtung einen rotationssymmetrischen Abscheideraum auf, der eine tangential an den Abscheideraum angeschlossene Zuströmleitung und eine vorzugsweise ebenfalls tangential angeschlossene Abströmleitung aufweist. Die Luft-/Gas-Abscheideeinrichtung basiert, wie prinzipiell bekannt, auf dem System der Zentrifugalabscheidung, wobei bei der Rotation der Hydraulikflüssigkeit in dem rotationssymmetrischen Abscheideraum die schweren Bestandteile, also die Flüssigkeit selbst, sich an die Wand anlagern und die Luft-/Gasanteile sich im Zentrum des Abscheideraumes sammeln. Die Rotationsachse des Abscheideraumes ist im Wesentlichen vertikal in der Maschine angeordnet und die Abströmleitung ist mit Abstand unterhalb der Zuströmleitung angeschlossen. Dadurch kann der Luft-/Gasanteil sich nicht nur in der Mitte des rotationssymmetrischen Abscheideraumes sammeln, sondern auch schwerkraftbedingt in den oberen Teil des Abscheideraumes wandern, so dass zu der Abströmleitung nur Hydraulikflüssigkeit gelangt, die einen geringen Luft-/Gasanteil aufweist.

In vorteilhafter Weise ist die Zuströmleitung in der oberen Hälfte des Abscheideraumes angeordnet, während die Abströmleitung im unteren Drittel des Abscheideraumes angeordnet ist.

Die Abströmleitung kann gleichsinnig zu einer durch die durch die Zuströmleitung eintretenden Hydraulikflüssigkeit erzeugten Drallströmung angeordnet sein, oder aber auch gegensinnig. Ist sie gleichsinnig, also in Richtung zur Drallströmung angeordnet, so tritt keine Behinderung der Strömung auf. Es ist jedoch in diesem Falle möglich, dass eine geringere Abscheidung von Luft-/Gasanteilen erfolgt, weil Luft-/Gas-Bestandteile mitgerissen werden können. Bei einer gegensinnigen Ausrichtung der Abströmleitung ist die Wahrscheinlichkeit, dass Luft-/Gas-Bestandteile mitgerissen werden, gering.

Um den Luft-/Gasanteil nach dessen Ausscheiden ableiten zu können, wird vorgeschlagen, dass am oberen Ende des Abscheideraumes ein Luft-/Gas-Ausscheidekanal angeschlossen ist, dessen Querschnitt gedrosselt ist. Die Drosselung ist vorteilhaft, damit der Druck der Hydraulikflüssigkeit nicht ungewollt abfällt und die Funktionsbaugruppen unzureichend mit Hydraulikflüssigkeit versorgt werden.

Der Drosselquerschnitt kann entweder als Düse ausgebildet sein oder der Ausscheidekanal kann in einen Spaltquerschnitt, z.B. eines Lagers, vorzugsweise eines Nockenwellenlagers, münden. Ein Nockenwellenlager ist deshalb empfehlenswert, weil bei modernen Brennkraftmaschinen im Bereich des Zylinderkopfes, also an einer geodätisch hohen Stelle des hydraulischen Versorgungssystems die Nockenwelle gelagert ist und weil im Bereich der Nockenwellenlager, z.B. im Bereich des Lagerbockes, die erfindungsgemäße Luft-/Gas-Abscheideeinrichtung eingebaut werden kann.

### Kurze Beschreibung der Zeichnungen

Zur weiteren Erläuterung der Erfindung wird auf die Zeichnungen verwiesen, in denen ein Ausführungsbeispiel der Erfindung vereinfacht dargestellt ist.
Es zeigen:
- Figur 1: einen Längsschnitt durch eine Luft-/Gas-Abscheideeinrichtung mit Schnitt durch eine Nockenwelle und einen Lagerspalt der Nockenwelle,
- Figur 2: einen Schnitt durch die Luft-/Gas-Abscheideeinrichtung gemäß der Linie II - II in Figur 1 und
- Figur 3: einen Schnitt durch die Luft-/Gas-Abscheideeinrichtung gemäß der Linie III - III in Figur 1.

### Detaillierte Beschreibung der Zeichnungen

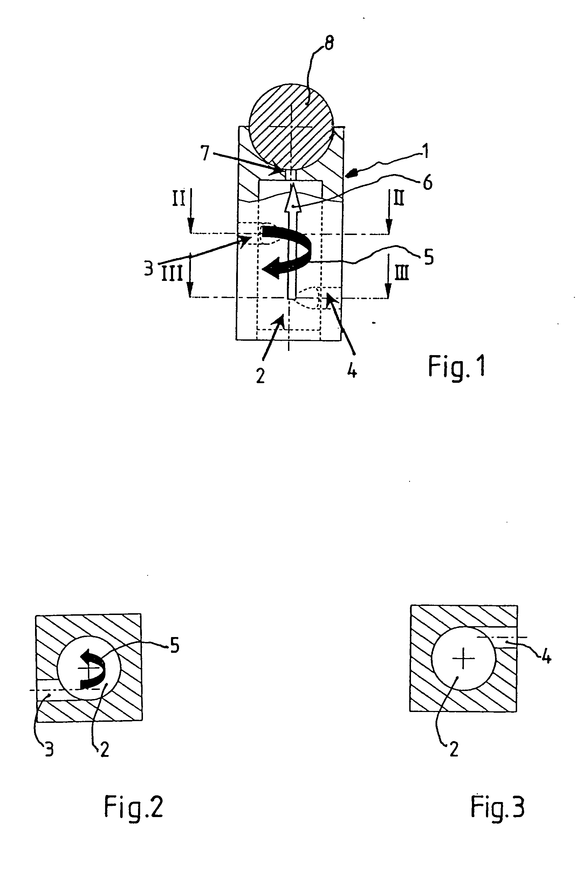

In den Figuren 1 bis 3 ist, soweit im Einzelnen dargestellt, mit 1 allgemein eine Luft-/Gas-Abscheideeinrichtung bezeichnet, die einen mit 2 bezeichneten rotationssymmetrischen, im Ausführungsbeispiel kreiszylindrisch ausgebildeten Abscheideraum aufweist, an den eine, in Figur 2 detailliert dargestellte Zuströmleitung 3 und eine mit 4 bezeichnete, in Figur 3 detailliert dargestellte Abströmleitung tangential angeschlossen sind. Die Rotationsachse des Abscheideraumes 2 ist vertikal innerhalb einer Brennkraftmaschine ausgerichtet, wobei die Zuströmleitung 3 in der oberen Hälfte und die Abströmleitung 4 im unteren Drittel des Abscheideraumes 2 angeschlossen sind. Die durch die tangentiale Zuströmung der Hydraulikflüssigkeit durch die Zuströmleitung 3 erzeugte Drallströmung ist mit einem mit 5 bezeichneten fetten Pfeil in Fig. 1 gekennzeichnet. Die Abströmleitung 4 ist gegensinnig zu der Richtung der Drallströmung gemäß Pfeil 5 angeschlossen, so dass die Wahrscheinlichkeit sehr gering ist, dass Luft-/Gas-Anteile durch die Drallströmung in die Abströmleitung 4 mitgerissen werden.

Wie dem nur gerahmt dargestellten Pfeil 6 in Fig. 1 zu entnehmen ist, sammeln sich die aufgrund der Zentrifugalwirkung ins Zentrum abgelenkten Luft-/Gas-Anteile im Inneren des Abscheideraumes 2 und steigen als leichtere Bestandteile an das obere Ende des Abscheideraumes 2 auf. Dort ist ein mit 7 bezeichneter Luft-/Gas-Ausscheidekanal eingearbeitet, der in den Lagerspalt einer mit 8 bezeichneten Nockenwelle mündet. Durch den Lagerspalt im Lager der Nockenwelle wird der Endquerschnitt des Luft-/Gas-Ausscheidekanals 7 gedrosselt, so dass nur ein vernachlässigbarer Druckabfall im Abscheideraum 2 und damit im Versorgungssystem eintritt und alle Funktionsbaugruppen mit einem hinreichenden Druck und mit einer hinreichenden Menge der Hydraulikflüssigkeit versorgt werden.

### Bezugszeichenliste

- 1: Luft-/Gas-Abscheideeinrichtung
- 2: Abscheideraum
- 3: Zuströmleitung
- 4: Abströmleitung
- 5: fetter Pfeil
- 6: gerahmter Pfeil
- 7: Luft-/Gas-Ausscheidekanal
- 8: Nockenwelle

## Patentansprüche

1. Hydraulisches Versorgungssystem von Maschinen, insbesondere von Brennkraftmaschinen, mit einer Pumpe, die aus einem Vorratsraum Hydraulikflüssigkeit durch Leitungen zu verschiedenen Funktionsbaugruppen, wie Lagern, Schalt- oder Steuerelementen, Aktuatoren oder der gleichen, fördert, von wo die Hydraulikflüssigkeit zurück zum Vorratsraum gelangt, **dadurch gekennzeichnet, dass** im Bereich der Leitungen eine Luft-/Gas-Abscheideeinrichtung (1) vorgesehen ist.

2. Hydraulisches Versorgungssystem nach Anspruch 1, **dadurch gekennzeichnet, dass** die Luft-/Gas-Abscheideeinrichtung (1) einen rotationssymmetrischen Abscheideraum (2) aufweist, der eine tangential an den Abscheideraum (2) angeschlossene Zuströmleitung (3) und eine vorzugsweise ebenfalls tangential angeschlossene Abströmleitung (4) aufweist.

3. Hydraulisches Versorgungssystem nach einem der Ansprüche 1 oder 2, **dadurch gekennzeichnet, dass** die Rotationsachse des Abscheideraumes (2) im Wesentlichen vertikal ausgerichtet und innerhalb der Maschine angeordnet ist und die Abströmleitung (4) mit Abstand unterhalb der Zuströmleitung (3) angeschlossen ist.

4. Hydraulisches Versorgungssystem nach einem der vorhergehenden Ansprüche, **dadurch gekennzeichnet, dass** die Zuströmleitung (3) in der oberen Hälfte des Abscheideraumes (2) angeordnet ist.

5. Hydraulisches Versorgungssystem nach einem der vorhergehenden Ansprüche, **dadurch gekennzeichnet, dass** die Abströmleitung (4) im unteren Drittel des Abscheideraumes (2) angeordnet ist.

6. Hydraulisches Versorgungssystem nach einem der vorhergehenden Ansprüche, **dadurch gekennzeichnet, dass** die Abströmleitung (4) gleichsinnig zu einer in dem Abscheideraum (2) erzeugten Drallströmung (fetter Pfeil 5) angeordnet ist.

7. Hydraulisches Versorgungssystem nach einem der vorhergehenden Ansprüche, **dadurch gekennzeichnet, dass** die Abströmleitung (4) gegensinnig zu einer in dem Abscheideraum (2) erzeugten Drallströmung (fetter Pfeil 5) angeschlossen ist.

8. Hydraulisches Versorgungssystem nach einem der vorhergehenden Ansprüche, **dadurch gekennzeichnet, dass** am oberen Ende des im Wesentlichen vertikal ausgerichteten Abscheideraumes (2) ein Luft-/Gas-Ausscheidekanal (7) angeschlossen ist.

9. Hydraulisches Versorgungssystem nach Anspruch 8, **dadurch gekennzeichnet, dass** der Querschnitt des Luft-/Gas-Ausscheidekanals (7) gedrosselt und als Düse ausgebildet ist.

10. Hydraulisches Versorgungssystem nach Anspruch 8, **dadurch gekennzeichnet, dass** der Luft-/Gas-Ausscheidekanal (7) zur Drosselung in einen Spaltquerschnitt, z.B. eines Lagers, mündet.

11. Hydraulisches Versorgungssystem nach einem der vorhergehenden Ansprüche, **dadurch gekennzeichnet, dass** die Luft-/Gas-Abscheideeinrichtung (1) im Bereich der geodätisch höchsten Stelle des hydraulischen Versorgungssystems angeordnet ist.
